# EUROPEAN PATENT APPLICATION

(11) **EP 4 607 914 A1**
(43) Date of publication of application: **27.08.2025**
(21) Application number: 23914943.8
(22) Date of filing: 20.11.2023
(51) Int. Cl.: H04N 9/31, H04N 9/73, H04N 9/69

(54) **ELECTRONIC DEVICE FOR SETTING PLURALITY OF PROJECTION AREAS, AND CONTROL METHOD THEREFOR**

(30) Priority: 02.01.2023 KR 20230000263
(71) Applicant: Samsung Electronics Co., Ltd., Suwon-si, Gyeonggi-do 16677 (KR)
(72) Inventor: SEO, Sungwon, Suwon-si, Gyeonggi-do 16677 (KR); KANG, Dukjin, Suwon-si, Gyeonggi-do 16677 (KR); KWON, Ohyun, Suwon-si, Gyeonggi-do 16677 (KR); KIM, Jiman, Suwon-si, Gyeonggi-do 16677 (KR); PARK, Sehyeok, Suwon-si, Gyeonggi-do 16677 (KR); SHIN, Mirae, Suwon-si, Gyeonggi-do 16677 (KR); JUNG, Seongwoon, Suwon-si, Gyeonggi-do 16677 (KR); JUNG, Hyeyoung, Suwon-si, Gyeonggi-do 16677 (KR); CHA, Taehwan, Suwon-si, Gyeonggi-do 16677 (KR); KIM, Tongjun, Suwon-si, Gyeonggi-do 16677 (KR); ROH, Mingu, Suwon-si, Gyeonggi-do 16677 (KR); RYU, Hoeseo, Suwon-si, Gyeonggi-do 16677 (KR); CHOI, Hangjin, Suwon-si, Gyeonggi-do 16677 (KR)
(74) Representative: Appleyard Lees IP LLP
(86) International application number: PCT/KR2023/018659
(87) International publication number: WO 2024/147479

(57) **Abstract**

An electronic device is disclosed. The electronic device comprises: a memory in which a first image including a first location recognition pattern and a first color pattern is stored; a communication interface; a projection unit; and at least one processor connected to the memory, the communication interface and the projection unit so as to control the electronic device, wherein the processor can: control the projection unit such that a first image is projected, and control the communication interface such that a control signal, which controls that a second image including a second location recognition pattern and a second color pattern is projected, is transmitted to other electronic device; and, based on a captured image acquired by photographing the area onto which the first image and the second image are projected being received from a user terminal device through the communication interface, acquire, on the basis of the first location recognition pattern and the second location recognition pattern, first information for changing a first projected area of the electronic device and/or a second projected area of the other electronic device and acquire, on the basis of the first color pattern and the second color pattern, second information for matching the projection colors of the electronic device and the other electronic device.

## Description

### [Technical Field]

The present disclosure relates to an electronic device and a control method therefor, and more particularly, to an electronic device for setting a plurality of projected areas, and a control method therefor.

### [Background Art]

With the development of electronic technology, various types of electronic devices are being developed. In particular, in recent years, various devices that provide large screens through various methods have been popularized.

For example, there is a method of providing a large screen by connecting projected areas of a plurality of projectors. For example, the projected areas of two projectors may be connected left and right to provide a wide screen, and the operation is called an edge blending operation.

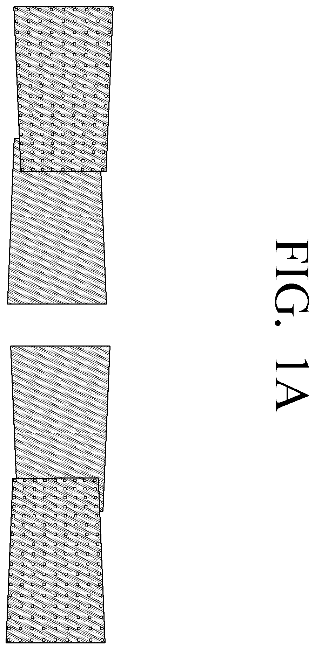

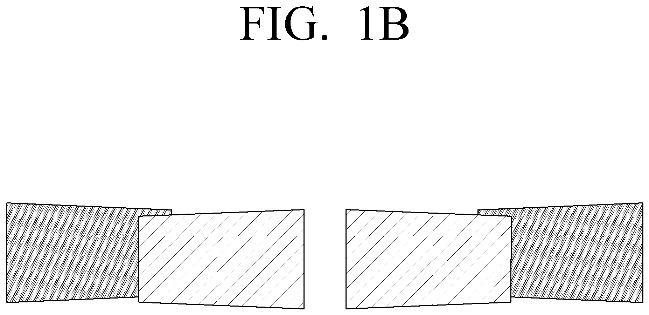

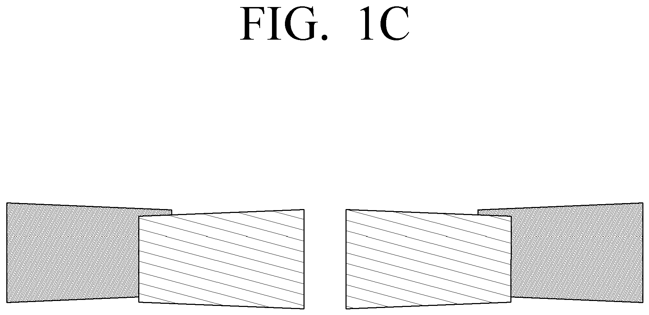

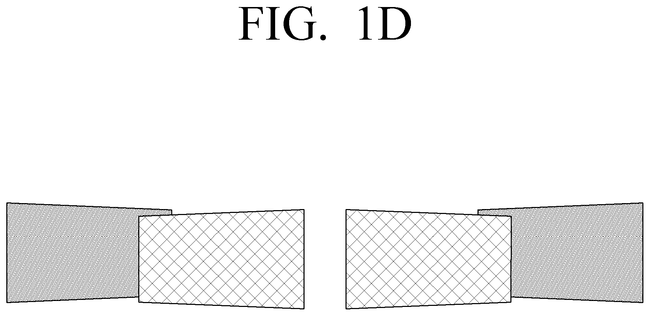

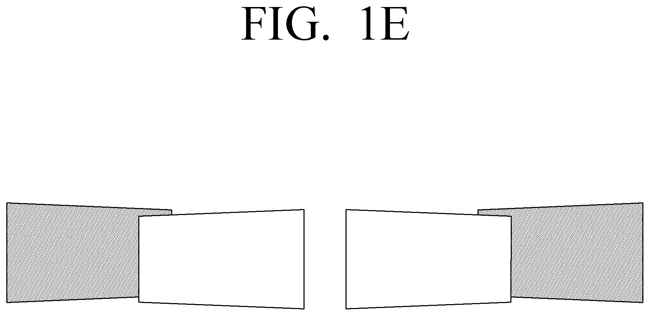

However, for the edge blending operation, a plurality of capturing are required to connect a plurality of projected areas through a fixed camera. For example, in the case of using the two projectors, as illustrated in FIG. 1A, there is a need to display a pattern for identifying projectors corresponding to each projected area and to perform capturing for the pattern. In addition, as illustrated in FIGS. 1A to 1E, there is a need to display a pattern for matching colors of two projectors and perform capturing for the pattern. In this case, there is also the problem that capturing is impossible with devices such as mobile phones. In addition, as a prerequisite for capturing as described above, a user needs to arrange two projectors according to set rules. In addition, there is also a problem that there is no separate guide for the blended area (overlapping area).

As described above, moving two projectors by linking the two projectors with each other may be very difficult for general users.

### [Disclosure]

### [Technical Solution]

According to an aspect of the present disclosure, an electronic device includes a memory configured to store a first image including a first location recognition pattern and a first color pattern, a communication interface, a projection unit, and at least one processor configured to be connected to the memory, the communication interface, and the projection unit to control the electronic device, in which the processor is configured to control the projection unit to project the first image, control the communication interface to transmit, to other electronic device, a control signal for controlling a second image including a second location recognition pattern and a second color pattern to be projected, and based on a captured image, which is an image of an area onto which the first image and the second image are projected, being received from a user terminal device through the communication interface, acquire first information for changing at least one of a first projected area of the electronic device or a second projected area of the other electronic device based on the first location recognition pattern and the second location recognition pattern, and acquire second information for matching projection colors of the electronic device and the other electronic device based on the first color pattern and the second color pattern.

The first location recognition pattern may include a plurality of first patterns indicating an outer edge of the first projected area, the second location recognition pattern may include a plurality of second patterns indicating an outer edge of the second projected area, the plurality of first patterns may be different from the plurality of second patterns, and the processor may be configured to identify the first projected area based on the plurality of first patterns, identify the second projected area based on the plurality of second patterns, and acquire information for changing at least one of a size, a shape, or a location of at least one of the first projected area or the second projected area based on the first projected area and the second projected area as the first information.

The processor may be configured to identify a first center of gravity of each of the plurality of first patterns and identify the first projected area based on the first center of gravity, and identify a second center of gravity of each of the plurality of second patterns, and identify the second projected area based on the second center of gravity.

Each of the first color pattern and the second color pattern may include R color, G color, B color, and W color according to a plurality of pieces of luminance, and the processor may be configured to acquire, as the second information, information for adjusting at least one of luminance, white balance, or gamma of at least one of the electronic device or the other electronic device based on the first color pattern and the second color pattern.

The processor may be configured to control the projection unit to change the location of the first projected area based on the first information, and change the projection color of the electronic device based on the second information.

The processor may be configured to control the communication interface to transmit, to the other electric device, a control signal for changing a location of the second projected area based on the first information and changing the projection color of the other electronic device based on the second information.

The processor may be configured to update the location of at least one of the first projected area or the second projected area based on the first information, identify an overlapping area of the updated first projected area and the updated second projected area, adjust luminance of an area corresponding to the overlapping area in first content, and control the projection unit to project the first content with the adjusted luminance.

The processor may control a communication interface to transmit, to the other electronic device, the control signal for allowing the other electronic device to adjust luminance of an area corresponding to an overlapping area in second content corresponding to the first content and project the second content with the adjusted luminance.

The first image may further include a first guide pattern for guiding a user to a relative location of the electronic device and the other electronic device, and the second image may further include a second guide pattern for guiding the user to the relative location of the electronic device and the other electronic device.

The memory may further store the second image, and the processor may be configured to control the communication interface to transmit, to the other electronic device, the second image and a control signal for controlling the second image to be projected.

According to another aspect of the present disclosure, a control method of an electronic device includes projecting a first image including a first location recognition pattern and a first color pattern, transmitting, to other electronic device, a control signal for controlling a second image including a second location recognition pattern and a second color pattern to be projected, receiving a captured image acquired by capturing an area onto which the first image and the second image are projected from a user terminal device, and acquiring first information for changing at least one of the first projected area of the electronic device or the second projected area of the other electronic device based on the first location recognition pattern and the second location recognition pattern, and acquiring second information for matching projection colors of the electronic device and the other electronic device based on the first color pattern and the second color pattern.

The first location recognition pattern may include a plurality of first patterns indicating an outer edge of the first projected area, the second location recognition pattern may include a plurality of second patterns indicating an outer edge of the second projected area, the plurality of first patterns may be different from the plurality of second patterns, and in the acquiring, the second projected area may be identified based on the plurality of second patterns, and the second projected area may be identified based on the plurality of second patterns, and information for changing at least one of a size, a shape, or a location of at least one of the first projected area or the second projected area based on the first projected area and the second projected area may be acquired as the first information.

In the acquiring, a first center of gravity of each of the plurality of first patterns may be identified and the first projected area may be identified based on the first center of gravity, and a second center of gravity of each of the plurality of second patterns may be identified and the second projected area may be identified based on the second center of gravity.

Each of the first color pattern and the second color pattern may include R color, G color, B color, and W color according to a plurality of pieces of luminance, and in the acquiring, information for adjusting at least one of luminance, white balance, or gamma of at least one of the electronic device or the other electronic device based on the first color pattern and the second color pattern may be acquired as the second information.

The control method may further include changing a location of the first projected area based on the first information, and changing the projection color of the electronic device based on the second information.

The control method may further include transmitting, to the other electric device, a control signal for changing a location of the second projected area based on the first information and changing the projection color of the other electronic device based on the second information.

The control method may further include updating the location of at least one of the first projected area or the second projected area based on the first information, identifying an overlapping area of the updated first projected area and the updated second projected area, adjusting the luminance of the area corresponding to the overlapping area in first content, and projecting the first content with the adjusted luminance.

The control method may further include transmitting, to the other electronic device, a control signal for allowing the other electronic device to adjust luminance of an area corresponding to an overlapping area in second content corresponding to the first content and project the second content with the adjusted luminance.

The first image may further include a first guide pattern for guiding a user to a relative location of the electronic device and the other electronic device, and the second image may further include a second guide pattern for guiding the user to the relative location of the electronic device and the other electronic device.

In the transmitting, the second image stored in the electronic device and the control signal for controlling the second image to be projected may be transmitted to the other electronic device.

### [Description of Drawings]

FIGS. 1A to 1E are diagrams for describing the related art.
FIG. 2 is a block diagram illustrating a configuration of an electronic system according to an embodiment of the present disclosure.
FIG. 3 is a block diagram illustrating a configuration of an electronic device according to an embodiment of the present disclosure.
FIG. 4 is a block diagram illustrating a detailed configuration of the electronic device according to an embodiment of the present disclosure.
FIG. 5 is a diagram for describing a first image and a second image according to an embodiment of the present disclosure.
FIGS. 6 and 7 are diagrams for describing a location recognition pattern according to an embodiment of the present disclosure.
FIGS. 8 to 10 are diagrams for describing a guide pattern according to an embodiment of the present disclosure.
FIG. 11 is a diagram for describing a color pattern according to an embodiment of the present disclosure.
FIG. 12 is a diagram for describing a coordinate transformation method according to an embodiment of the present disclosure.
FIG. 13 is a diagram for describing a method of using a center of gravity according to an embodiment of the present disclosure.
FIG. 14 is a sequence diagram for describing a linkage operation according to an embodiment of the present disclosure.
FIG. 15 is a diagram for describing a first image and a second image according to an embodiment of the present disclosure.
FIG. 16 is a flowchart for describing a control method of an electronic device according to an embodiment of the present disclosure.

### [Mode for Invention]

The present disclosure is to provide an electronic device for improving user convenience by matching projected areas and projection colors of a plurality of projectors, and a control method therefor.

Hereinafter, the present disclosure will be described in detail with reference to the accompanying drawings.

General terms that are currently widely used were selected as terms used in embodiments of the present disclosure in consideration of functions in the present disclosure, but may be changed according to the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the present disclosure. Therefore, the terms used in embodiments of the present disclosure are to be defined on the basis of the meaning of the terms and the contents throughout the present disclosure rather than simple names of the terms.

In the specification, an expression "have", "may have", "include", "may include", or the like, indicates existence of a corresponding feature (e.g., a numerical value, a function, an operation, a component such as a part, or the like), and does not exclude existence of an additional feature.

An expression "at least one of A and/or B" is to be understood to represent "A" or "B" or "any one of A and B".

Expressions "first," "second," "1st^{t}" or "2nd" or the like, used in the present disclosure may indicate various components regardless of a sequence and/or importance of the components, will be used only in order to distinguish one component from the other components, and do not limit the corresponding components.

Singular forms include plural forms unless the context clearly indicates otherwise. It should be understood that terms "include" or "formed of" used in the specification specify the presence of features, numerals, steps, operations, components, parts, or combinations thereof mentioned in the specification, but do not preclude the presence or addition of one or more other features, numerals, steps, operations, components, parts, or combinations thereof.

In the present disclosure, the term user may refer to a person using an electronic device or a device (for example, an artificial intelligence electronic device) using the electronic device.

Hereinafter, diverse embodiments of the present disclosure will be described in more detail with reference to the accompanying drawings.

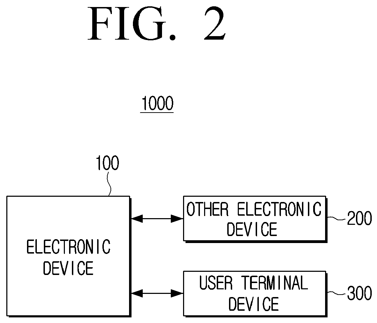

FIG. 2 is a block diagram illustrating a configuration of an electronic system 1000 according to an embodiment of the present disclosure. As illustrated in FIG. 2, the electronic system 1000 includes an electronic device 100, the other electronic device 200, and a user terminal device 300.

The electronic device 100 may be a device that projects an image onto a projection surface. For example, the electronic device 100 may be a projector.

The electronic device 100 may be a device that matches a projected area of the electronic device 100 with a projected area of the other electronic device 200. Here, the projected area means an area where an image is displayed on the projection surface by a projection operation of the electronic device 100.

The electronic device 100 may be a device that matches a projection color of the electronic device 100 with a projection color of the other electronic device 200.

The electronic device 100 may receive captured images acquired by capturing the projected area of the electronic device 100 and the projected area of the other electronic device 200 from the user terminal device 300, and perform the matching operation based on the captured image. For example, the electronic device 100 may transmit a capturing command to the user terminal device 300, and receive the captured image from the user terminal device 300. Here, the electronic device 100 may transmit, to the user terminal device 300, not only the capturing command, but also information on a first image projected by the electronic device 100 and a second image projected by the other electronic device 200. The user terminal device 300 may perform capturing to include the first image and the second image.

The electronic device 100 may transmit the matching information according to the matching operation to the other electronic device 200. The electronic device 100 may perform a linkage operation with the other electronic device 200 based on the matching information.

However, the present disclosure is not limited thereto, and the electronic device 100 may be any device that projects an image and is capable of performing the linkage operation with the other electronic device 200.

The other electronic device 200 may be a device that projects an image onto the projection surface. For example, the electronic device 100 may be the projector.

The projected area of the other electronic device 200 may be different from the projected area of the electronic device 100. However, the projected area of the other electronic device 200 may partially overlap with the projected area of the electronic device 100.

When the other electronic device 200 receives the matching information from the electronic device 100, the other electronic device 200 may perform the linkage operation with the electronic device 100 based on the matching information.

However, the present disclosure is not limited thereto, and the other electronic device 200 may be any device that projects the image and is capable of performing the linkage operation with the electronic device 100.

The user terminal device 300 is a device that acquires the captured images by capturing the projected area of the electronic device 100 and the projected area of the other electronic device 200. The user terminal device 300 may be a device that is equipped with a camera, such as a DSLR, a mirrorless camera, a smartphone, a tablet PC, smart glasses, a smart watch, etc., and acquires the captured images.

For example, when the user terminal device 300 receives the capturing command from the electronic device 100, the user terminal device 300 may acquire the captured images including the projected area of the electronic device 100 and the projected area of the other electronic device 200. Here, the user terminal device 300 may receive not only the capturing command from the electronic device 100, but also the information on the first image projected by the electronic device 100 and the second image projected by the other electronic device 200. In this case, the user terminal device 300 may acquire the captured image when the capturing range includes the first image and the second image, and may guide a user that the location of the user terminal device 300 needs to move when a capturing range does not include the first image and the second image.

The user terminal device 300 may transmit the captured image to the electronic device 100.

However, the present disclosure is not limited thereto, and the user terminal device 300 may be any device that is equipped with a camera and directly acquires the captured image, or is linked with a camera to acquire the captured image from the camera.

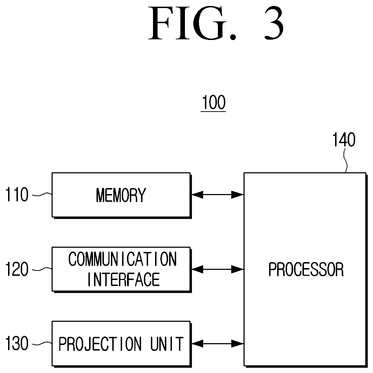

FIG. 3 is a block diagram illustrating the configuration of the electronic device 100 according to an embodiment of the present disclosure.

According to FIG. 3, the electronic device 100 includes a memory 110, a communication interface 120, a projection unit 130, and a processor 140.

The memory 110 may refer to hardware storing information such as data in an electric or magnetic form so that the processor 140 may access the memory 110. To this end, the memory 110 may be implemented as at least one hardware of a non-volatile memory, a volatile memory, a flash memory, a hard disk drive (HDD), a solid state drive (SDD), a RAM, a ROM, or the like.

At least one instruction required for an operation of the electronic device 100 or the processor 140 may be stored in the memory 110. Here, the instruction is a code unit for instructing the operation of the electronic device 100 or the processor 140, and may be written in a machine language, which is a language that a computer may understand. Alternatively, a plurality of instructions that perform a specific task of the electronic device 100 or the processor 140 may be stored in the memory 110 as an instruction set.

The memory 110 may store data that is information in units of bits or bytes capable of representing characters, numbers, images, and the like. For example, the memory 110 may store warping information, blending operation information, etc.

The memory 110 is accessed by the processor 140, and the instruction, the instruction set, or data may be read/written/modified/deleted/updated or the like by the processor 140.

The communication interface 120 is a component performing communication with various types of external apparatuses depending on various types of communication manners. For example, the electronic device 100 may perform communication with the other electronic device 200 or the user terminal device 300 through the communication interface 120.

The communication interface 120 may include a wireless fidelity (WiFi) module, a Bluetooth module, an infrared communication module, a wireless communication module, and the like. Here, each communication module may be implemented in the form of at least one hardware chip.

The Wi-Fi module and the Bluetooth module perform communication in a Wi-Fi manner and a Bluetooth manner, respectively. When the Wi-Fi module or the Bluetooth module is used, various connection information such as a service set identifier (SSID), a session key, and the like, is first transmitted and received, communication is connected using the connection information, and various information may then be transmitted and received. The infrared communication module performs communication according to an infrared data association (IrDA) technology of wirelessly transmitting data to a short distance using an infrared ray positioned between a visible ray and a millimeter wave.

The wireless communication module may include at least one communication chip performing communication according to various wireless communication standards such as zigbee, 3rd generation (3G), 3rd generation partnership project (3GPP), long term evolution (LTE), LTE advanced (LTE-A), 4th generation (4G), 5th generation (5G), and the like, in addition to the communication manner described above.

Alternatively, the communication interface 120 may include a wired communication interface such as HDMI, DP, Thunderbolt, USB, RGB, D-SUB, and DVI.

In addition, the communication interface 120 may include a local area network (LAN) module, an Ethernet module, and at least one of wired communication modules performing communication using a pair cable, a coaxial cable, an optical fiber cable, etc.

The projection unit 130 may project an image onto the projection surface. Specifically, the projection unit 130 may project an image or video including at least one of content received from a source device and pre-stored content onto the projected area using a light source such as a lamp or LED.

The projection unit 130 may be configured to require a focal distance greater than a predetermined distance. For example, the electronic device 100 is implemented as a mini projector, and the projection unit 130 may be configured to require a focal distance of at least 1 m.

The processor 140 generally controls the operation of the electronic device 100. Specifically, the processor 140 may be connected to each component of the electronic device 100 to generally control an operation of the electronic device 100. For example, the processor 140 may be connected to components such as the memory 110, the communication interface 120, the projection unit 130, a sensor (not illustrated), a user interface (not illustrated), etc., to control the operation of the electronic device 100.

At least one processor 140 may include one or more of a central processing unit (CPU), a graphics processing unit (GPU), an accelerated processing unit (APU), a many integrated core (MIC), a neural processing unit (NPU), a hardware accelerator, or a machine learning accelerator. At least one processor 140 may control one or any combination of other components of the electronic device 100 and perform operations related to communication or data processing. At least one processor 140 may execute one or more programs or instructions stored in the memory 110. For example, at least one processor 140 may perform the method according to an embodiment of the present disclosure by executing one or more instructions stored in the memory 110.

When the method according to an embodiment of the present disclosure includes a plurality of operations, the plurality of operations may be performed by one processor or by a plurality of processors. For example, when a first operation, a second operation, and a third operation are performed by the method according to an embodiment, the first operation, the second operation, and the third operation may all be performed by a first processor, the first operation and the second operation may be performed by the first processor (e.g., a general-purpose processor), and the third operation may be performed by a second processor (e.g., an artificial intelligence-specific processor).

At least one processor 140 may be implemented as a single core processor including one core, or one or more multicore processors including a plurality of cores (e.g., homogeneous multicore or heterogeneous multicore). When at least one processor 140 is implemented as a multicore processor, each of the plurality of cores included in the multicore processor may include an internal memory of the processor such as a cache memory and an on-chip memory, and a common cache shared by a plurality of cores may be included in a multicore processor. In addition, each of the plurality of cores (or some of the plurality of cores) included in the multi-core processor may read and perform program instructions for implementing the method according to an embodiment of the present disclosure, and all (or part) of the plurality of cores may be linked to read and perform program instructions for implementing the method according to an embodiment of the present disclosure.

When the method according to an embodiment of the present disclosure includes a plurality of operations, the plurality of operations may be performed by one of a plurality of cores included in a multicore processor, or may be performed by the plurality of cores. For example, when the first operation, the second operation, and the third operation are performed by the method according to an embodiment, the first operation, the second operation, and the third operation may all be performed by the first processor in the multicore processor, the first operation and the second operation may be performed by a first core included in the multicore processor, and the third operation may be performed by a second core included in the multicore processor.

In the embodiments of the present disclosure, at least one processor 140 may be a system-on-chip (SoC) in which one or more processors and other electronic components are integrated, a single-core processor, a multi-core processor, or a core included in the single-core processor or the multi-core processor. Here, the core may be implemented as CPU, GPU, APU, MIC, NPU, a hardware accelerator, a machine learning accelerator, or the like, but embodiments of the present disclosure are not limited thereto. However, for the convenience of description, the operation of the electronic device 100 will be described below using the expression processor 140.

The processor 140 may control the projection unit 130 to project the first image and control the communication interface 120 to transmit, to the other electronic device 200, a control signal for controlling the second image including a second location recognition pattern and a second color pattern to be projected.

For example, when the user command for the linkage operation with the other electronic device 200 is received, the processor 140 may control the projection unit 130 to project the first image, and control the communication interface 120 to transmit, to the other electronic device 200, the control signal for controlling the second image including the second location recognition pattern and the second color pattern to be projected. Here, the processor 140 may control the communication interface 120 to transmit, to the other electronic device 200, the control signal for controlling the second image including the second location recognition pattern and the second color pattern to be projected, and control the projection unit 130 to project the first image. Alternatively, the memory 110 may further store the second image, and the processor 140 may control the communication interface 120 to transmit, to the other electronic device 200, the second image and the control signal for controlling the second image to be projected.

When the captured image, which is the image of the area where the first image and the second image are projected, is received from the user terminal device 300 through the communication interface 120, the processor 140 acquire first information for changing at least one of the first projected area of the electronic device 100 or the second projected area of the other electronic device 200 based on the first location recognition pattern and the second location recognition pattern, and acquire second information for matching projection colors of the electronic device 100 and the other electronic device 200 based on the first color pattern and the second color pattern.

For example, when the electronic device 100 projects the first image and the other electronic device 200 projects the second image, the user may capture the area onto which the first image and the second image are projected through the user terminal device 300, and transmit the captured image to the electronic device 100. Alternatively, the processor 140 may control the communication interface 120 to project the first image and transmit, to the other electronic device 200, the second image and the control signal for controlling the second image to be projected, and then transmit, to the user terminal device 300, the control signal for controlling the area onto which the first image and the second image are projected to be captured. In this case, the user terminal device 300 may acquire the captured image through the capturing when the area onto which the first image and the second image are projected is within the capturing range, and transmit the captured image to the electronic device 100. Alternatively, when the area onto which the first image and the second image are projected is outside the capturing range, the user terminal device 300 may provide a message requesting the adjustment of the capturing range of the user terminal device 300 to a user, and enter a manual capturing mode. For example, when the user terminal device 300 is arranged in a state where it may capture the area onto which the first image and the second image are projected, if the first location recognition pattern and the second location recognition pattern are identified through a live view, the user terminal device 300 may acquire the captured image through the capturing and transmit the captured image to the electronic device 100. Alternatively, when the user terminal device 300 is arranged in a state where it may not capture the area onto which the first image and the second image are projected, and thus, the first location recognition pattern and the second location recognition pattern are not identified through the live view, the user terminal device 300 may provide the message requesting the adjustment of the capturing range of the user terminal device 300 to the user and enter the manual capturing mode. In this case, the user terminal device 300 may display the message through the display of the user terminal device 300 or output the message as a sound. Alternatively, the user terminal device 300 may transmit the message to the electronic device 100, and the electronic device 100 may display the message or output the message as the sound. Alternatively, the electronic device 100 may control the projection unit 130 to project the message.

Here, the first location recognition pattern includes a plurality of first patterns representing an outer edge of the first projected area, the second location recognition pattern includes a plurality of second patterns representing an outer edge of the second projected area, the plurality of first patterns are different from the plurality of second patterns, and the processor 140 may identify the first projected area based on the plurality of first patterns, identify the second projected area based on the plurality of second patterns, and acquire information for changing at least one of a size, a shape, or a location of at least one of the first projected area or the second projected area based on the first projected area and the second projected area as the first information.

For example, the first location recognition pattern may include four first patterns located at vertices of the first projected area, and the second location recognition pattern may include four second patterns located at vertices of the second projected area. The four first patterns all have the same shape, and the four second patterns all have the same shape, but the first pattern and the second pattern may be different. The processor 140 identifies the first projected area based on the plurality of first patterns and identifies the second projected area based on the plurality of second patterns, and when the shapes of the first projected area and the second projected area are not rectangular, the processor 140 may acquire information for correcting the shapes of the first projected area and the second projected area as the first information. In addition, when the first projected area is located at a slightly higher or lower location than the second projected area, the processor 140 may acquire information for raising or lowering the location of at least one of the first projected area or the second projected area as the first information. In addition, when the sizes of the first projected area and the second projected area are different, the processor 140 may acquire information for changing the sizes of the first projected area and the second projected area to be the same, as the first information. For example, when a top line of the first projected area is higher than that of the second projected area and a bottom line of the first projected area is higher than that of the second projected area, the processor 140 may acquire information for lowering the location of the first projected area or raising the location of the second projected area as the first information. Alternatively, when the top line of the first projected area is higher than that of the second projected area and the bottom line of the first projected area is lower than that of the second projected area, the processor 140 may acquire information for enlarging the size of the first projected area or reducing the size of the second projected area as the first information.

The processor 140 may identify a first center of gravity of each of the plurality of first patterns, identify the first projected area based on the first center of gravity, identify a second center of gravity of each of the plurality of second patterns, and identify the second projected area based on the second center of gravity. Here, the center of gravity may mean a center point of the pattern. For example, assuming the first pattern is a square shape of 2cm × 2cm, the center of gravity may be the center point of the square pattern. In this case, the processor 120 may identify the center of gravity of the first pattern, and may identify, as the first pattern, a square formed by two horizontal lines spaced 1 cm apart from the center of gravity of the first pattern and two vertical lines spaced 1 cm apart from the center of gravity of the first pattern.

Since the plurality of first location recognition patterns or the plurality of second location recognition patterns included in the captured image go through the process of projection and capturing, the shape of the pattern may be distorted. Accordingly, the processor 140 may identify the center of gravity of each pattern and identify the projected area from the identified center of gravity to increase accuracy. However, the present disclosure is not limited thereto, and a method using the center of gravity may also be applied to a first guide pattern and a second guide pattern.

Each of the first color pattern and the second color pattern includes R color,

G color, B color, and W color according to a plurality of pieces of luminance, and the processor 140 may acquire, as the second information, information for adjusting at least one of the luminance, white balance, or gamma of at least one of the electronic device 100 or the other electronic device 200 based on the first color pattern and the second color pattern. That is, each of the first image and the second image includes both the location recognition pattern and the color pattern, and the processor 140 may identify the projected area and the color from one captured image. Accordingly, the linkage operation of the electronic device 100 and the other electronic device 200 is possible without multiple capturing, and user convenience may be improved.

The processor 140 may control the projection unit 130 to change the location of the first projected area based on the first information, and change the projection color of the electronic device 100 based on the second information.

Alternatively, the processor 140 may control the communication interface 120 to transmit, to the other electronic device 200, a control signal for controlling the location of the second projected area to change based on the first information and a projection color of the other electronic device 200 to change based on the second information.

Alternatively, the processor 140 may control the projection unit 130 to change the location of the first projected area based on the first information, and control the communication interface 120 to transmit, to the other electronic device 200, the control signal for controlling the location of the second projected area to change, and control the communication interface 120 to transmit, to the other electronic device 200, the control signal for controlling the projection color of the electronic device 100 to change and the projection color of the other electronic device 200 to change based on the second information.

The processor 140 may consider a wall surface including the first projected area and the second projected area in the process of acquiring the first information. For example, the processor 140 may identify not only the first projected area and the second projected area but also the wall surface including the first projected area and the second projected area from the captured image. The processor 140 may generate the first information so that the combined area of the first projected area and the second projected area is located at the center of the wall surface.

The processor 140 may consider the surrounding brightness in the process of acquiring the second information. For example, when the surrounding brightness is higher than or equal to the preset brightness, the processor 140 may acquire the second information so that the lower brightness among the brightness of the projection color of the electronic device 100 and the brightness of the projection color of the other electronic device 200 is adjusted to the higher brightness.

Alternatively, the processor 140 may acquire, as the second information, the information for adjusting at least one of the white balance or gamma of at least one of the electronic device 100 or the other electronic device 200 by further considering the type of the surrounding light.

The processor 140 may update the location of at least one of the first projected area or the second projected area based on the first information, identify an overlapping area of the updated first projected area and the updated second projected area, adjust luminance of an area corresponding to the overlapping area in first content, and control the projection unit 130 to project the first content with the adjusted luminance. Here, the electronic device 100 and the other electronic device 200 may be in a state of operating in an overlapping screen mode. For example, when a user command for changing the mode of the electronic device 100 to an overlapping screen mode is received, the processor 140 may form a communication channel with the other electronic device 200 and transmit a control signal for changing the mode of the other electronic device 200 to the overlapping screen mode to the other electronic device 200. Alternatively, when the communication channel is formed with the other electronic device 200, the processor 140 may change the mode of the electronic device 100 to the overlapping screen mode and transmit the control signal for changing the mode of the other electronic device 200 to the overlapping screen mode to the other electronic device 200.

When the mode of the electronic device 100 changes to the overlapping screen mode, the processor 140 may control the projection unit 130 to project a message guiding a location where the electronic device 100 should be arranged. Alternatively, when the mode of the electronic device 100 changes to the overlapping screen mode, the processor 140 may display the message guiding the location where the electronic device 100 should be arranged through the display provided in the electronic device 100 or output the message as sound. Alternatively, when the mode of the electronic device 100 changes to the overlapping screen mode, the processor 140 may control the projection unit 130 to project the guide or pattern guiding the location where the electronic device 100 should be arranged. Alternatively, when the mode of the electronic device 100 changes to the overlapping screen mode, the processor 140 may output a message guiding the location of the electronic device 100 to be arranged within a preset distance from the other electronic device 200 operating in the overlapping screen mode together with the electronic device 100.

The processor 140 may control the communication interface 120 to transmit, to the other electronic device 200, the control signal for allowing the other electronic device 200 to adjust luminance of an area corresponding to an overlapping area in second content corresponding to the first content and project the second content with the adjusted luminance. Here, the processor 140 may adjust the luminance of the area corresponding to the overlapping area in the first content and the second content so that no sense of heterogeneity occurs in an area excluding the overlapping area of the first projected area and the second projected area. For example, when the processor 140 lowers the luminance of the area corresponding to the overlapping area in the first content by 50%, the processor may lower the brightness of the area corresponding to the overlapping area in the second content by 50%. In addition, the second content may be stored in the other electronic device 200, but may also be provided by the electronic device 100 to the other electronic device 200. When the electronic device 100 provides the second content to the other electronic device 200, the processor 140 may control the communication interface 120 to transmit, to the other electronic device 200, the control signal for controlling the luminance of the area corresponding to the overlapping area in the second content to be adjusted and the second content with the adjusted luminance to be projected.

Meanwhile, the first image may further include the first guide pattern for guiding a user to a relative location of the electronic device 100 and the other electronic device 200, and the second image may further include the second guide pattern for guiding the user to the relative location of the electronic device 100 and the other electronic device 200. For example, when the mode of the electronic device 100 operates in an overlapping screen mode, the processor 140 controls the projection unit 130 to project the first image including the first guide pattern, and when the mode of the other electronic device 200 operates in the overlapping screen mode, the other electronic device 200 may project a second image including the second guide pattern. The user may arrange the electronic device 100 and the other electronic device 200 based on the first guide pattern and the second guide pattern.

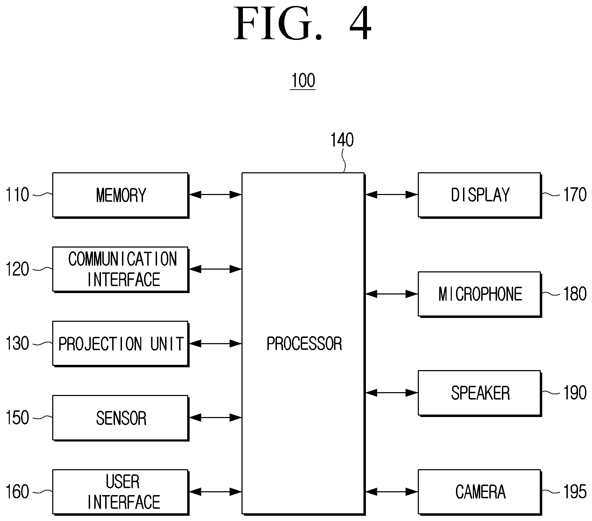

FIG. 4 is a block diagram illustrating detailed components of the electronic device 100 according to an embodiment of the present disclosure. The electronic device 100 may include the memory 110, the communication interface 120, the projection unit 130, and the processor 140. In addition, referring to FIG. 4, the electronic device 100 may further include a sensor 150, a user interface 160, a display 170, a microphone 180, a speaker 190, and a camera 195. Detailed description of components illustrated in FIG. 4 that overlap with components illustrated in FIG. 3 will be omitted.

The sensor 150 is a sensor for identifying a distance from the electronic device 100 to the projection surface, and may include a ToF sensor. The ToF sensor may be a sensor that calculates a distance for light emitted from an object through an infrared wavelength to bounce back and recognize three-dimensionality, spatial information, and movement of an object.

Alternatively, the sensor 150 may include a sensor that performs an auto-focusing function from the electronic device 100 to the projection surface. The processor 140 may identify the distance from the electronic device 100 to the projection surface based on the information acquired from the sensor that performs the auto-focusing function. However, the present disclosure is not limited thereto, and the processor 140 may identify the distance from the electronic device 100 to the projection surface through the camera 195.

The sensor 150 may include at least one of an infrared sensor or a tilt sensor, and the processor 140 may identify the distance from the electronic device 100 to the projection surface based on the information acquired from at least one of the infrared sensor or the tilt sensor.

The user interface 160 may be implemented as a button, a touch pad, a mouse, a keyboard, etc., or may be implemented as a touch screen that may perform both of the display function and manipulation input function. Here, the button may be various types of buttons such as a mechanical button, a touch pad, a wheel, and the like, formed in any region such as a front surface portion, a side surface portion, a back surface portion, and the like, of a body appearance of the electronic device 100.

The display 170 is a configuration that displays an image, and may be implemented as various types of displays such as a liquid crystal display (LCD), an organic light emitting diode (OLED) display, a plasma display panel (PDP), and the like. A driving circuit, a backlight unit, and the like, that may be implemented in the form such as an a-si thin film transistor (TFT), a low temperature poly silicon (LTPS), a TFT, an organic TFT (OTFT), and the like, may be included in the display 170. Meanwhile, the display 170 may be implemented as a touch screen combined with a touch sensor, a flexible display, a three-dimensional (3D) display, or the like.

The microphone 180 is configured to receive sound and convert the sound into an audio signal. The microphone 180 is electrically connected to the processor 140 and may receive sound under the control of the processor 140.

For example, the microphone 180 may be formed integrally with an upper side, a front surface, a side surface, or the like, of the electronic device 100. Alternatively, the microphone 180 may be installed on a remote control separate from the electronic device 100. In this case, the remote control may receive sound through the microphone 180 and provide the received sound to the electronic device 100.

The microphone 180 may include various components such as a microphone collecting sound having an analog form, an amplifying circuit amplifying the collected sound, an A/D converting circuit sampling the amplified sound to convert the amplified sound into a digital signal, a filter circuit removing a noise component from the converted digital signal, and the like.

Meanwhile, the microphone 180 may be implemented in the form of a sound sensor, and any configuration that may collect sound may be used.

The speaker 190 is a component outputting various notification sounds, an audio message, or the like, as well as various audio data processed by the processor 140.

The camera 195 is a component for capturing a still image or a moving image. The camera 195 may capture a still image at a specific point in time, but may also continuously capture a still image.

The camera 195 may include a lens, a shutter, an aperture, a solid state imaging device, an analog front end (AFE), and a timing generator (TG). The shutter controls the time for light reflected from the subject to enter the camera 195, and the aperture mechanically increases or decreases the size of the opening through which light enters to control the amount of light incident on the lens. When the solid state imaging device accumulates the light reflected from the subject as photocharges, it outputs an image by the photocharges as an electrical signal. The TG outputs a timing signal for reading out pixel data of the solid state imaging device, and the AFE samples and digitizes the electrical signal output from the solid state imaging device.

As described above, the electronic device 100 may perform linkage operation with the other electronic device 200 through a single captured image to omit a complex process for linkage operation, thereby improving the user convenience. In addition, during the linkage operation process, it is possible to perform a linkage operation through a universal method by performing the capturing using a device such as a user's smartphone without a dedicated camera or tripod. In particular, even if the resolution of the camera, such as the user's smartphone, is low, the location identification performance may be improved through the operation using the shape of the pattern and the center of gravity, etc.

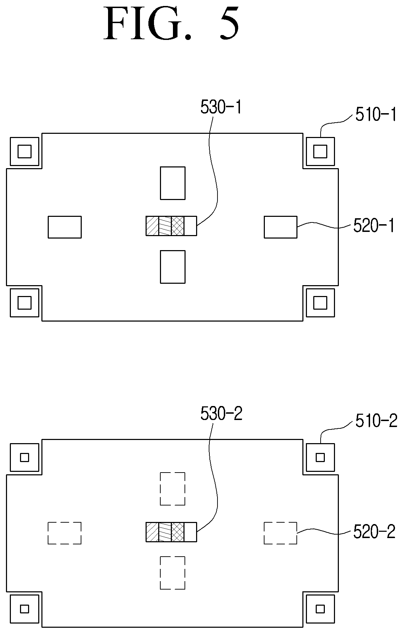

Hereinafter, the operation of the electronic device 100 will be described in more detail with reference to FIGS. 5 to 14. In FIGS. 5 to 14, individual embodiments are described for convenience of description. However, individual embodiments of FIGS. 5 to 14 may be implemented in any combination.

FIG. 5 is a diagram for describing the first image and the second image according to an embodiment of the present disclosure.

The first image may include a first location recognition pattern 510-1, a first guide pattern 520-1, and a first color pattern 530-1, as illustrated in the upper part of FIG. 5.

The second image may include a second location recognition pattern 510-2, a second guide pattern 520-2, and a second color pattern 530-2, as illustrated in the lower part of FIG. 5.

The guide pattern is a pattern for guiding the user to the relative location of the electronic device 100 and the other electronic device 200, and the user may arrange the electronic device 100 and the other electronic device 200 based on the first guide pattern 520-1 and the second guide pattern 520-2.

The processor 140 may identify a first location recognition pattern 510-1, the first color pattern 530-1, the second location recognition pattern 510-2, and the second color pattern 530-2 from the captured image received from the user terminal device 300.

The processor 140 may identify a first projected area of the electronic device 100 by identifying four first location recognition patterns 510-1, and may identify a second projected area of the other electronic device 200 by identifying four second location recognition patterns 510-2. Here, the shape of the first location recognition pattern 510-1 is different from the shape of the second location recognition pattern 510-2, and the processor 140 may distinguish the first projected area and the second projected area based on the shape of each pattern.

The processor 140 may acquire first information for changing at least one of the first projected area or the second projected area so that the linkage operation is performed in a state where a part of the first projected area and the second projected area overlaps.

Each of the first color pattern 530-1 and the second color pattern 530-2 includes R color, G color, B color, and W color by a plurality of pieces of luminance, and the processor 140 may acquire second information for matching the projection colors of the electronic device 100 and the other electronic device 200 by identifying the first color pattern 530-1 and the second color pattern 530-2.

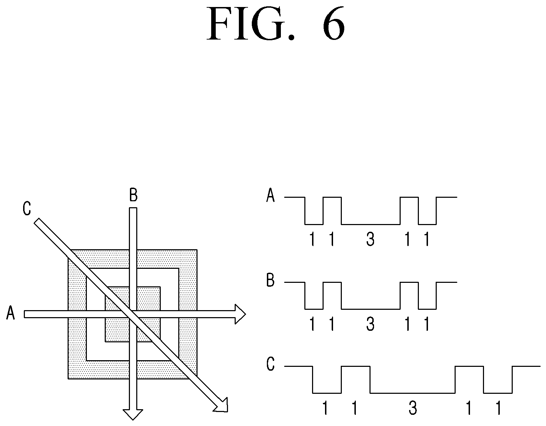

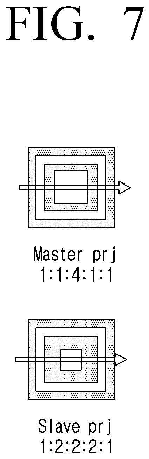

FIGS. 6 and 7 are diagrams for describing a location recognition pattern according to an embodiment of the present disclosure.

The location recognition pattern may be a pattern including black and white, as illustrated in FIG. 6. However, the present disclosure is not limited thereto, and the location recognition pattern may be implemented in various colors. In addition, the location recognition pattern may be implemented with three or more colors.

The processor 140 may identify the projected area by identifying the entire pattern, or may identify the projected area by identifying a part of the pattern. For example, the processor 140 may identify the projected area by identifying the ratio of the length of each section based on the point where black and white intersect along any line in the pattern. For example, when the processor 140 identifies the pattern based on line A, the ratio of the lengths of each section may be identified as 1:1:3:1:1. Even when the pattern is identified based on line B or line C, the ratio of the lengths of each section may be identified as 1:1:3:1:1. That is, due to the symmetry of the pattern, the ratio of the lengths of each section may be the same regardless of which line is used as a reference.

The processor 140 may identify the first projected area and the second projected area based on the shape of the pattern. For example, the first location recognition pattern may be different from the second location recognition pattern. For example, the upper part of FIG. 7 may be the first location recognition pattern, and the lower part of FIG. 7 may be the second location recognition pattern. When the processor 140 identifies the first location recognition pattern based on the horizontal line, the ratio of the lengths of each section may be identified as 1:1:4:1:1, and when the processor 140 identifies the second location recognition pattern based on the horizontal line, the ratio of the lengths of each section may be identified as 1:2:2:2:1. That is, the processor 140 may distinguish the location recognition pattern based on the identified ratio, and distinguish the first projected area and the second projected area based on each of the distinguished location recognition pattern. In the above, for the convenience of description, it has been described that all the first location recognition patterns included in the first image are the same, and all the second location recognition patterns included in the second image are the same, but the present disclosure is not limited thereto. For example, the pattern at the upper left, the pattern at the lower left, the pattern at the upper right, and the pattern at the lower right in the first image may all be different. In addition, the first location recognition pattern in the first image may be located at the center. In this case, the processor 140 may identify the first projected area by multiplying the first location recognition pattern by a preset magnification.

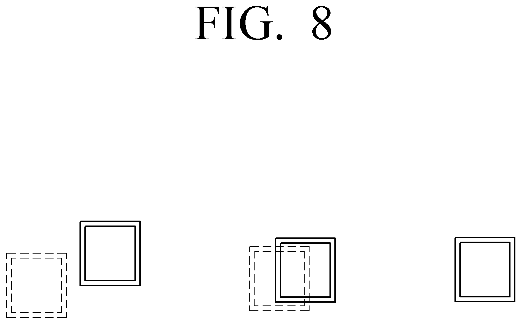

FIGS. 8 to 10 are diagrams for describing a guide pattern according to an embodiment of the present disclosure.

The guide pattern may be a pattern for guiding the user to the relative location of the electronic device 100 and the other electronic device 200. For example, each of the first image and the second image includes four guide patterns, and each pattern may be arranged spaced apart from each other in the up, down, left, and right directions.

The user may arrange the electronic device 100 and the other electronic device 200 so that at least one of the plurality of first guide patterns and at least one of the plurality of second guide patterns overlap at least partially. For example, the user may arrange the electronic device 100 and the other electronic device 200 so that the first guide pattern arranged on the right side of the first projected area overlaps at least partially with the second guide pattern arranged on the left side of the second projected area on the right side of the first projected area. For example, as illustrated on the left side of FIG. 8, when the first guide pattern positioned on the right side of the first projected area does not overlap with the second guide pattern positioned on the left side of the second projected area on the right side of the first projected area, the overlapping area of the first projected area and the second projected area may be noticeable. To solve the problem of the overlapping area being noticeable, as illustrated in the middle or right side of FIG. 8, the user may arrange the electronic device 100 and the other electronic device 200 so that the first guide pattern partially overlaps or completely overlaps with the second guide pattern.

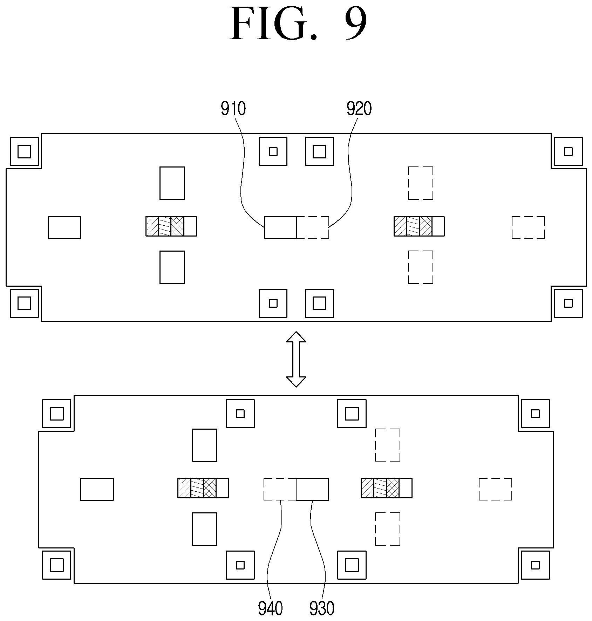

FIG. 9 is a diagram illustrating in more detail this operation. As illustrated in the upper part of FIG. 9, the user may position the electronic device 100 and the other electronic device 200 so that the right side of a first guide pattern 910 partially overlaps with the left side of a second guide pattern 920. Alternatively, as illustrated in the lower part of FIG. 9, the user may arrange the electronic device 100 and the other electronic device 200 so that the left portion of the first guide pattern 930 partially overlaps with the right portion of the second guide pattern 940. The overlapping area is wider at the lower part of FIG. 9 than at the upper part of FIG. 9, and when the overlapping area of the first projected area and the second projected area becomes wider, the overlapping area may be noticeable.

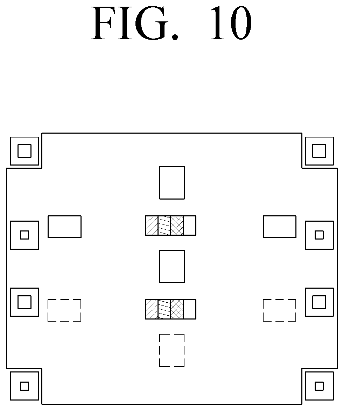

Alternatively, as illustrated in FIG. 10, the first projected area and the second projected area may be connected vertically. For example, the user may arrange the electronic device 100 and the other electronic device 200 so that the first guide pattern arranged on the lower side of the first projected area overlaps at least partially with the second guide pattern arranged on the upper side of the second projected area on the lower side of the first projected area.

By adjusting the location and size of the guide pattern, manufacturers may control how much overlap is permitted for the user. For example, when the guide pattern is widened left and right, the allowable range may be widened in the horizontal direction, and when the guide pattern is widened up and down, the allowable range may be widened in the vertical direction.

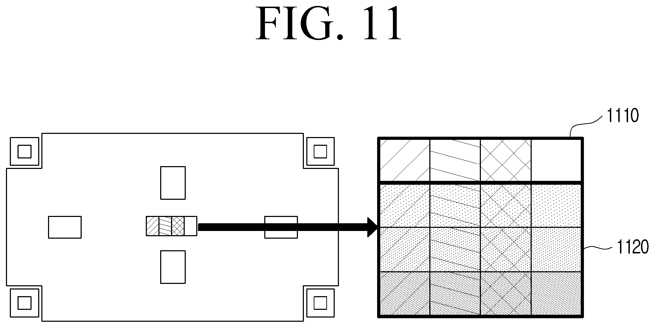

FIG. 11 is a diagram for describing a color pattern according to an embodiment of the present disclosure.

As illustrated in FIG. 11, the color pattern may include a first region 1110 including R color, G color, B color, and W color, and a second region 1120 in which the brightness value of the first region is adjusted stepwise.

The processor 140 may identify the first projected area based on the first location recognition pattern, identify a projection color of the electronic device 100 based on a first color pattern within the first projected area, identify the second projected area based on the second location recognition pattern, identify a projection color of the other electronic device 200 based on a second color pattern within the second projected area, and acquire second information for matching projection colors of the electronic device 100 and the other electronic device 200 based on the first color pattern and the second color pattern.

The processor 140 may match the luminance or white balance of the electronic device 100 and the other electronic device 200 based on the first area 1110, and match the gamma of the electronic device 100 and the other electronic device 200 based on the second area 1120. In addition, the processor 140 may match the R color, the G color, and the B color of the electronic device 100 and the other electronic device 200, respectively, based on the first area 1110. Here, the gamma may be adjusted by the gamma or multi-point white balance adjustment function for each R color, G color, and B color.

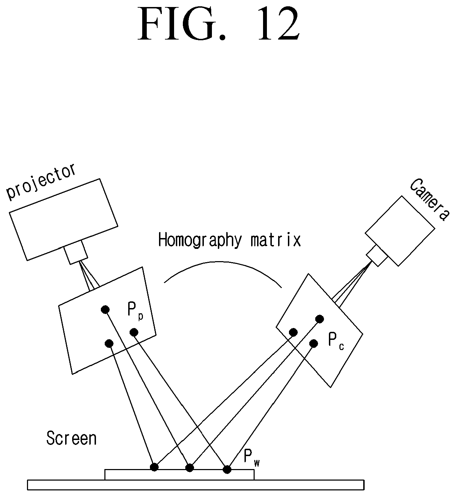

FIG. 12 is a diagram for describing a coordinate transformation method according to an embodiment of the present disclosure.

The processor 140 may acquire a mutual plane projection relationship transformation matrix by comparing pattern coordinates projected by the electronic device 100 with pattern coordinates read from the sensor reference by the camera of the user terminal device 300.

For example, as illustrated in FIG. 12, the processor 140 may acquire a homography matrix between the electronic device 100 and the user terminal device 300 using coordinates Pp projected on a projection surface Pw and coordinates Pc by the user terminal device 300, and may acquire the homography matrix between the other electronic device 200 and the user terminal device 300 in the same manner.

The processor 140 may acquire the homography matrix between the electronic device 100 and the projection surface and the homography matrix between the other electronic device 200 and the projection surface based on two homography matrices.

The processor 140 finally projects an image based on a projection surface reference coordinate system, and when the electronic device 100 and the other electronic device 200 are converted and projected into their respective coordinate systems, the completed image may be projected.

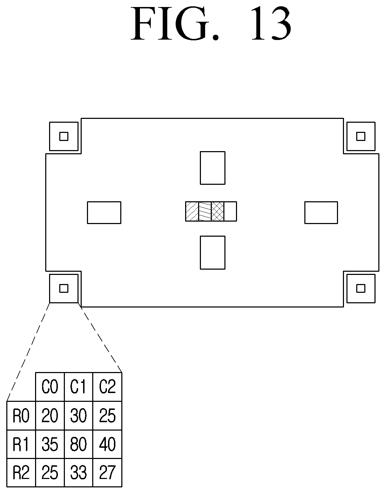

FIG. 13 is a diagram for describing a method of using a center of gravity according to an embodiment of the present disclosure.

Since the pattern included in the captured image goes through the process of projection and capturing, the shape of the pattern may be distorted. Accordingly, the processor 140 may identify the center of gravity of each pattern and identify the projected area from the identified center of gravity to increase accuracy.

For example, as illustrated in FIG. 13, the processor 140 may acquire a 3×3 data value from the lower left of the first image included in the captured image. However, this value may be different from the original value of the first image due to the projection and capturing. The processor 140 may identify the center of gravity of a 3×3 data value and identify the lower left of the first image based on the center of gravity. For example, the processor 140 may acquire the center of gravity in the following manner. X= Σ(20 × 0 + 30 × 1 + 25 × 2 + 35 × 0 + 80 × 1 + 40 × 2 + 25 × 0 + 33 × 1 + 27 × 2) ÷ Σ(20 + 30 + 25 + 35 + 80 + 40 + 25 + 33 + 27) = 1.038095238Y = Σ(20 × 0 + 30 × 0 + 25 × 0 + 35 × 1 + 80 × 1 + 40 × 1 + 25 × 2 + 33 × 2 + 27 × 2) ÷ Σ(20 + 30 + 25 + 35 + 80 + 40 + 25 + 33 + 27) = 1.031746032

The processor 140 may identify the center of gravity as the center of the location recognition pattern and identify the lower left of the first image based on the location recognition pattern.

The processor 140 may identify an outer edge of the first image through the same method to identify the first projected area. In addition, the processor 140 may identify an outer edge of the second image through the same method to identify the second projected area. The processor 140 may perform at least one of warping, keystone, or blending of the electronic device 100 and the other electronic device 200 based on the first projected area and the second projected area.

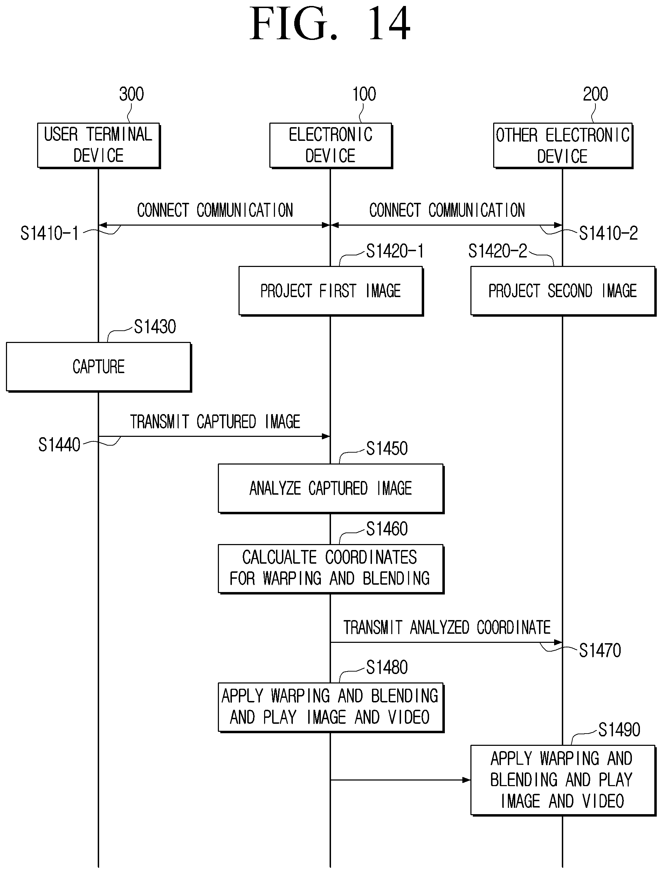

FIG. 14 is a sequence diagram for describing a linkage operation according to an embodiment of the present disclosure.

First, the electronic device 100 may connect communication with the other electronic device 200 and the user terminal device 300 (S1410-1, S1410-2). Here, the communication connection may be performed sequentially or simultaneously. In addition, the communication standards connected to each may be the same or different.

The electronic device 100 may project the first image (S1420-1), and the other electronic device 200 may project the second image (S1420-2). Here, the other electronic device 200 may project the second image based on the signal received from the electronic device 100. Alternatively, the other electronic device 200 may receive the second image from the electronic device 100 and project the received second image.

The user terminal device 300 may capture the area including the first projected area where the first image is projected and the second projected area where the second image is projected (S1430), and transmit the captured image to the electronic device 100 (S1440). For example, the electronic device 100 may transmit the capturing command to the user terminal device 300, and the user terminal device 300 may capture the area including the first projected area and the second projected area based on the capturing command. Alternatively, the electronic device 100 may project the first image and provide the user with the capturing signal as a sound, etc.

The electronic device 100 may analyze the captured image (S1450), calculate coordinates for warping, blending, etc., (S1460), and transmit the analyzed coordinates to the other electronic device 200 (S1470).

The electronic device 100 may play an image and video to which the warping, the blending, etc., are applied (S1480), and the other electronic device 200 may also play an image and video to which the warping, the blending, etc., are applied based on the analyzed coordinates (S1490).

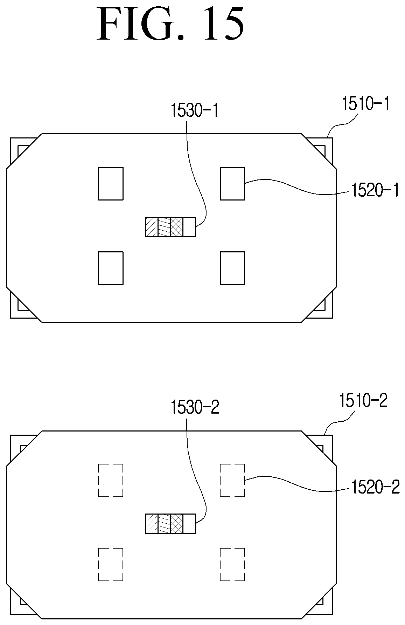

FIG. 15 is a diagram for describing the first image and the second image according to an embodiment of the present disclosure.

In FIG. 5, the first location recognition pattern 510-1 and the second location recognition pattern 510-2 are described as being squared patterns. However, the present disclosure is not limited thereto, and the first location recognition pattern may be a triangular pattern 1510-1 as illustrated in the upper part of FIG. 15, and the second location recognition pattern may be a triangular pattern 1510-2 as illustrated in the lower part of FIG. 15. Here, all the four first location recognition patterns have the same shape, and all the four second location recognition patterns also have the same shape, but the first location recognition pattern and the second location recognition pattern may have different shapes.

However, the present disclosure is not limited thereto, and the location recognition pattern may be implemented in various shapes. In addition, all the four first location recognition patterns may have different shapes, and all the four second location recognition patterns may have different shapes.

In FIG. 5, the first guide pattern 520-1 and the second guide pattern 520-2 are described as being arranged up, down, left, and right based on the center of the projected area, but the present disclosure is not limited thereto. For example, the first guide pattern may be arranged at the upper right 1520-1, upper left, lower right, and lower left relative to the center of the first projected area, as illustrated in the upper part of FIG. 15, and the second guide pattern may be arranged at the upper right 1520-2, upper left, lower right, and lower left relative to the center of the second projected area, as illustrated in the lower part of FIG. 15. Here, the first guide pattern and the second guide pattern may differ in at least one of the shape, color, or type of border line.

However, the present disclosure is not limited thereto, and the guide pattern may be implemented in various shapes and colors.

In FIG. 15, a first color pattern 1530-1 and a second color pattern 1530-2 are illustrated as being located at the center of each projected area, but the present disclosure is not limited thereto. The location of the color pattern may also be various.

In addition, it is also possible for at least some of the location recognition pattern, the guide pattern, and the color pattern to be implemented as one. For example, four colors included in the color pattern may be projected onto four vertices of the projected area, respectively. In this case, the location recognition pattern and the color pattern may be combined into one.

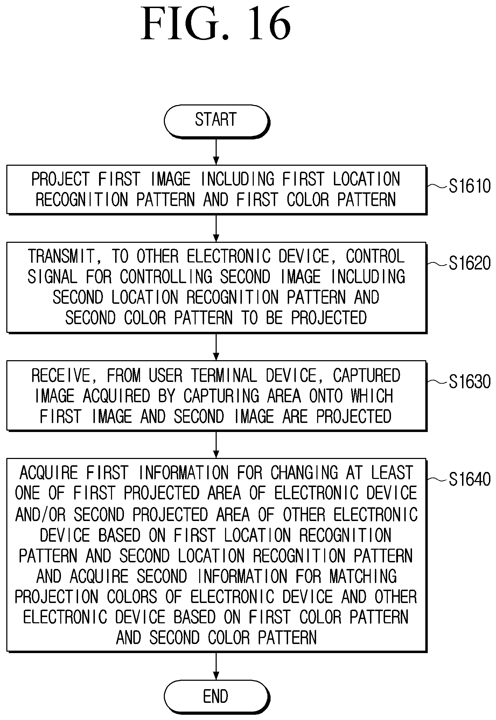

FIG. 16 is a flowchart for describing a control method of an electronic device according to an embodiment of the present disclosure.

First, the first image including the first location recognition pattern and the first color pattern is projected (S1610). Then, the control signal for controlling the second image including the second location recognition pattern and the second color pattern to be projected is transmitted to the other electronic device (S1620). Then, the captured image in which the area onto which the first image and the second image are projected is received from the user terminal device (S1630). The first information for changing at least one of the first projected area of the electronic device or the second projected area of the other electronic device is acquired based on the first location recognition pattern and the second location recognition pattern, and the second information for matching the projection colors of the electronic device and the other electronic device is acquired based on the first color pattern and the second color pattern (S1640).

In addition, the first location recognition pattern includes the plurality of first patterns representing the outer edge of the first projected area, the second location recognition pattern includes the plurality of second patterns representing the outer edge of the second projected area, and the plurality of first patterns are different from the plurality of second patterns, and in the acquiring (S1640), the first projected area may be identified based on the plurality of first patterns, the second projected area may be identified based on the plurality of second patterns, and the information for changing at least one of the size, shape, or location of at least one of the first projected area or the second projected area may be identified based on the first projected area and the second projected area as the first information.

In the acquiring (S1640), the first center of gravity of each of the plurality of first patterns may be identified, the first projected area may be identified based on the first center of gravity, the second center of gravity of each of the plurality of second patterns may be identified, and the second projected area may be identified based on the second center of gravity.

In addition, each of the first color pattern and the second color pattern includes R color, G color, B color, and W color according to the plurality of pieces of luminance, and in the acquiring (S1640), the information for adjusting at least one of the luminance, white balance, or gamma of at least one of the electronic device 100 or the other electronic device 200 based on the first color pattern and the second color pattern may be acquired as the second information.

In addition, the control method may further include changing the location of the first projected area based on the first information and changing the projection color of the electronic device based on the second information.

The control method may further include transmitting, to the other electric device, the control signal for changing the location of the second projected area based on the first information and changing the projection color of the other electronic device based on the second information.

The control method may further include updating the location of at least one of the first projected area or the second projected area based on the first information, identifying the overlapping area of the updated first projected area and the updated second projected area, adjusting the luminance of the area corresponding to the overlapping area in the first content, and projecting the first content with the adjusted luminance.

The control method may further include transmitting, to the other electronic device, the control signal for allowing the other electronic device to adjust luminance of an area corresponding to an overlapping area in second content corresponding to the first content and project the second content with the adjusted luminance.

The first image may further include the first guide pattern for guiding the user to the relative location of the electronic device and the other electronic device, and the second image may further include the second guide pattern for guiding the user to the relative location of the electronic device and the other electronic device.

In addition, in the transmitting (S1620), the second image stored in the electronic device and the control signal for controlling the second image to be projected may be transmitted to the other electronic device.

According to various embodiments of the present disclosure as described above, the electronic device may perform linkage operation with the other electronic device through a single captured image to omit a complex process for linkage operation, thereby improving the user convenience.

In addition, during the linkage operation process, it is possible to perform a linkage operation through a universal method by performing the capturing using a device such as a user's smartphone without a dedicated camera or tripod.

In particular, even if the resolution of the camera, such as the user's smartphone, is low, the location identification performance may be improved through the operation using the shape of the pattern and the center of gravity, etc.

Meanwhile, the linkage operation of the electronic device and the other electronic device has been described above, but the present disclosure is not limited thereto. For example, the electronic device may perform the linkage operation with the plurality of other electronic devices. In this case, the projected area of the electronic device and the plurality of projected areas of the other electronic device may form an area extended in at least one of horizontal or vertical directions.

The electronic device may be connected to the user terminal device by the wired or wireless manner. In addition, the electronic device may be connected to the other electronic device by the wired or wireless manner and perform sync matching.

Meanwhile, the electronic device has been described as the subject performing most of the operations in the above, but the present disclosure is not limited thereto. For example, the user terminal device may be the subject performing most of the operations. For example, the user terminal device may control the electronic device to project the first image and the other electronic device to project the second image, capture the area including the first projected area onto which the first image is projected and the second projected area onto which the second image is projected, acquire the first information for changing at least one of the first projected area of the electronic device or the second projected area of the other electronic device based on the first location recognition pattern corresponding to the first image included in the captured image and the second location recognition pattern corresponding to the second image, acquire the second information for matching the projection colors of the electronic device and the other electronic device based on the first color pattern corresponding to the first image and the second color pattern corresponding to the second image included in the captured image , and transmit the first information and the second information to the electronic device and the other electronic device.

Alternatively, a separate device other than the user terminal device may be the subject performing most of the operations. For example, a server may control the electronic device to project the first image and the other electronic device to project the second image, control the user terminal device to capture the area including the first projected area onto which the first image is projected and the second projected area onto which the second image is projected, acquire the first information for changing at least one of the first projected area of the electronic device or the second projected area of the other electronic device based on the first location recognition pattern corresponding to the first image and the second location recognition pattern corresponding to the second image included in the captured image that are received from the user terminal device, acquire the second information for matching the projection colors of the electronic device and the other electronic device based on the first color pattern corresponding to the first image and the second color pattern corresponding to the second image included in the captured image, and transmit the first information and the second information to the electronic device and the other electronic device.

Meanwhile, according to an embodiment of the present disclosure, the diverse embodiments described above may be implemented as software including instructions stored in a machine-readable storage medium (e.g., a computer-readable storage medium). A machine may be a device that invokes the stored instruction from the storage medium and may be operated according to the invoked instruction, and may include the electronic device (e.g., the electronic device A) according to the disclosed embodiments. When the instruction is executed by a processor, the processor may perform the function corresponding to the instruction directly or by using other components under the control of the processor. The command may include codes created or executed by a compiler or an interpreter. The machine-readable storage medium may be provided in a form of a non-transitory storage medium. Here, the term 'non-transitory' means that the storage medium is tangible without including a signal, and does not distinguish whether data are semi-permanently or temporarily stored in the storage medium.

In addition, according to an embodiment of the present disclosure, the methods according to the diverse embodiments described above may be included and provided in a computer program product. The computer program product may be traded as a product between a seller and a purchaser. The computer program product may be distributed in the form of a storage medium (e.g., a compact disc read only memory (CD-ROM)) that may be read by the machine or online through an application store (e.g., PlayStore^{™}). In a case of the online distribution, at least portions of the computer program product may be at least temporarily stored in a storage medium such as a memory of a manufacturer server, an application store server, or a relay server or be temporarily created.

In addition, according to an embodiment of the present disclosure, the diverse embodiments described above may be implemented in a computer or a computer-readable recording medium using software, hardware, or a combination of software and hardware. In some cases, embodiments described in the present disclosure may be implemented as a processor itself. According to a software implementation, embodiments such as procedures and functions described in the specification may be implemented as separate software. Each software may perform one or more functions and operations described in the present disclosure.

Meanwhile, computer instructions for performing processing operations of the machines according to the diverse embodiment of the present disclosure described above may be stored in a non-transitory computer-readable medium. The computer instructions stored in the non-transitory computer-readable medium allow a specific machine to perform the processing operations in the machine according to the diverse embodiments described above when they are executed by a processor of the specific machine. The non-transitory computer-readable medium is not a medium that stores data for a while, such as a register, a cache, a memory, or the like, but means a medium that semi-permanently stores data and is readable by the device. Specific examples of the non-transitory computer-readable medium may include a compact disk (CD), a digital versatile disk (DVD), a hard disk, a Blu-ray disk, a USB, a memory card, a read only memory (ROM), and the like.

In addition, each of components (e.g., modules or programs) according to the diverse embodiments described above may include a single entity or a plurality of entities, and some of the corresponding sub-components described above may be omitted or other sub-components may be further included in the diverse embodiments. Alternatively, or additionally, some of the components (e.g., the modules or the programs) may be integrated into one entity, and may perform functions performed by the respective corresponding components before being integrated in the same or similar manner. Operations performed by the modules, the programs, or the other components according to various embodiments may be executed in a sequential manner, a parallel manner, an iterative manner, or a heuristic manner, at least some of the operations may be performed in a different order or be omitted, or other operations may be added.

Although embodiments of the present disclosure have been illustrated and described hereinabove, the present disclosure is not limited to the abovementioned specific embodiments, but may be variously modified by those skilled in the art to which the present disclosure pertains without departing from the gist of the present disclosure as disclosed in the accompanying claims. These modifications should also be understood to fall within the scope and spirit of the present disclosure.

## Claims

1. An electronic device, comprising:
a memory configured to store a first image including a first location recognition pattern and a first color pattern;
a communication interface;
a projection unit; and
at least one processor configured to be connected to the memory, the communication interface, and the projection unit to control the electronic device,
wherein the processor is configured to:
control the projection unit to project the first image,
control the communication interface to transmit, to other electronic device, a control signal for controlling a second image including a second location recognition pattern and a second color pattern to be projected, and
based on a captured image, which is an image of an area onto which the first image and the second image are projected, being received from a user terminal device through the communication interface, acquire first information for changing at least one of a first projected area of the electronic device or a second projected area of the other electronic device based on the first location recognition pattern and the second location recognition pattern, and acquire second information for matching projection colors of the electronic device and the other electronic device based on the first color pattern and the second color pattern.

2. The electronic device as claimed in claim 1, wherein the first location recognition pattern includes a plurality of first patterns indicating an outer edge of the first projected area,
the second location recognition pattern includes a plurality of second patterns indicating an outer edge of the second projected area,
the plurality of first patterns are different from the plurality of second patterns, and
the processor is configured to:
identify the first projected area based on the plurality of first patterns,
identify the second projected area based on the plurality of second patterns, and
acquire information for changing at least one of a size, a shape, or a location of at least one of the first projected area or the second projected area based on the first projected area and the second projected area as the first information.

3. The electronic device as claimed in claim 2, wherein the processor is configured to:
identify a first center of gravity of each of the plurality of first patterns and identify the first projected area based on the first center of gravity, and
identify a second center of gravity of each of the plurality of second patterns, and identify the second projected area based on the second center of gravity.

4. The electronic device as claimed in claim 1, wherein each of the first color pattern and the second color pattern includes R color, G color, B color, and W color according to a plurality of pieces of luminance, and
the processor is configured to acquire, as the second information, information for adjusting at least one of luminance, white balance, or gamma of at least one of the electronic device or the other electronic device based on the first color pattern and the second color pattern.

5. The electronic device as claimed in claim 1, wherein the processor is configured to:
control the projection unit to change a location of the first projected area based on the first information, and
change the projection color of the electronic device based on the second information.

6. The electronic device as claimed in claim 1, wherein the processor is configured to control the communication interface to transmit, to the other electric device, a control signal for changing a location of the second projected area based on the first information and changing the projection color of the other electronic device based on the second information.

7. The electronic device as claimed in claim 1, wherein the processor is configured to:
update a location of at least one of the first projected area or the second projected area based on the first information,
identify an overlapping area of the updated first projected area and the updated second projected area,
adjust luminance of an area corresponding to the overlapping area in first content, and
control the projection unit to project the first content with the adjusted luminance.

8. The electronic device as claimed in claim 7, wherein the processor is configured to control the communication interface to transmit, to the other electronic device, a control signal for allowing the other electronic device to adjust luminance of an area corresponding to an overlapping area in second content corresponding to the first content and project the second content with the adjusted luminance.

9. The electronic device as claimed in claim 1, wherein the first image further includes a first guide pattern for guiding a user to a relative location of the electronic device and the other electronic device, and
the second image further includes a second guide pattern for guiding the user to the relative location of the electronic device and the other electronic device.

10. The electronic device as claimed in claim 1, wherein the memory further stores the second image, and
the processor is configured to control the communication interface to transmit, to the other electronic device, the second image and a control signal for controlling the second image to be projected.

11. A control method of an electronic device, comprising:
projecting a first image including a first location recognition pattern and a first color pattern;
transmitting, to other electronic device, a control signal for controlling a second image including a second location recognition pattern and a second color pattern to be projected;
receiving a captured image acquired by capturing an area onto which the first image and the second image are projected from a user terminal device; and
acquiring first information for changing at least one of a first projected area of the electronic device or a second projected area of the other electronic device based on the first location recognition pattern and the second location recognition pattern, and acquiring second information for matching projection colors of the electronic device and the other electronic device based on the first color pattern and the second color pattern.

12. The control method as claimed in claim 11, wherein the first location recognition pattern includes a plurality of first patterns indicating an outer edge of the first projected area,
the second location recognition pattern includes a plurality of second patterns indicating an outer edge of the second projected area,
the plurality of first patterns are different from the plurality of second patterns, and
in the acquiring,
the first projected area is identified based on the plurality of first patterns,
the second projected area is identified based on the plurality of second patterns, and
information for changing at least one of a size, a shape, or a location of at least one of the first projected area or the second projected area based on the first projected area and the second projected area is acquired as the first information.

13. The control method as claimed in claim 12, wherein in the acquiring,
a first center of gravity of each of the plurality of first patterns is identified and the first projected area is identified based on the first center of gravity, and
a second center of gravity of each of the plurality of second patterns is identified, and the second projected area is identified based on the second center of gravity.

14. The control method as claimed in claim 11, wherein each of the first color pattern and the second color pattern includes R color, G color, B color, and W color according to a plurality of pieces of luminance, and
in the acquiring, information for adjusting at least one of luminance, white balance, or gamma of at least one of the electronic device or the other electronic device based on the first color pattern and the second color pattern is acquired as the second information.

15. The control method as claimed in claim 11, further comprising:
changing a location of the first projected area based on the first information; and
changing the projection color of the electronic device based on the second information.
